# EUROPÄISCHE PATENTSCHRIFT

(11) **EP 2 017 121 B1**
(45) Veröffentlichungstag und Bekanntmachung des Hinweises auf die Patenterteilung: **16.03.2011**
(21) Anmeldenummer: 08012100.7
(22) Anmeldetag: 04.07.2008
(51) Int. Cl.: B60N 2/48, B21C 37/15

(54) **Kopfstützen-Tragelement**
Support rod for headrest
Tige de montage d'un appui-tête

(30) Priorität: 17.07.2007 DE 102007033604
(43) Veröffentlichungstag der Anmeldung: 21.01.2009
(73) Patentinhaber: Muhr und Bender KG, 57439 Attendorn (DE)
(72) Erfinder: Hentschel, Stephan, 57439 Attendorn (DE); Finge, Peter, 57439 Attendorn (DE); Mintkewitz, Georg, 57629 Atzelgift (DE); Rinsdorf, Andreas, 57258 Freudenberg (DE)
(74) Vertreter: Oberwalleney, Stephan

(56) Entgegenhaltungen:
- DE-A1- 10 013 817
- DE-A1- 19 856 981
- DE-B3- 10 323 693
- DE-U1- 29 624 453
- US-A1- 2005 077 772

## Beschreibung

Die Erfindung betrifft ein Kopfstützen-Tragelement zum Verbinden einer Kopfstütze mit einem Sitz, insbesondere einem Kraftfahrzeugsitz.

Aus der DE 296 24 453 U1 ist ein Haltebügel für eine Kopfstütze aus einem Rohrkörper bekannt. Der Haltebügel hat als Bauteilabschnitte im Bereich des unteren Endes Rastkerben, im Bereich des oberen Endes eine Schiebeführung und in einem mittleren Bereich eine umlaufende Materialverdickung. Das obere und untere Ende sind gegenüber dem mittleren Bereich mit einer geringeren Wandstärke ausgeführt. Die Materialverdickung und die Rastkerben werden durch Rundkneten eines Rohrhalbzeuges hergestellt. Die zweiterlige Form des Anspruchs 1 basiert auf dieser Schrift.

Aus der DE 297 17 568 U1 ist bereits ein Bügel für Kraftfahrzeug-Kopfstützen bekannt, der aus einem umgeformten Rohrstück aus Leichtmetall hergestellt ist.

Aus der EP 0 916 549 B1 ist eine Kopfstütze für Kraftfahrzeugsitze bekannt, die ein Polster umfaßt, in dem ein Rahmen aufgenommen ist. Die Kopfstütze wird von einem Paar von Stangen gehalten, wobei der Rahmen der Kopfstütze gegenüber den Stangen höhenverstellbar angebracht ist. Die Stangen sind mit der Rückenlehne des Kraftfahrzeugsitzes verbunden.

Aus der EP 1 481 743 A2 ist es bekannt, ein aus einem flexibel gewalztem Bandmaterial mit in Bandlängsrichtung unterschiedlichen Dicken hergestelltes Blechelement zu einem Rohrkörper mit unrundem Querschnitt umzuformen. Dabei kann durch Umformen um die Bandlängsrichtung ein Rohrkörper mit über der Länge variabler Wandstärke oder durch Umformen quer zur Bandlängsrichtung ein Rohrkörper mit über dem Umfang variabler Wandstärke hergestellt werden.

Aus der DE 102 10 156 A1 ist ein Verfahren zum Herstellen eines Rohres bekannt, das mehrere Rohrabschnitte aufweist, deren Wandstärken sich voneinander unterscheiden. Das Verfahren umfaßt die Schritte Umformen eines Bleches, das eine ungleichförmiges Dickenprofil aufweist, zu einem Rohrkörper und Verschweißen zu einem Rohr. Das so hergestellte Rohr kann als Überrollbügel für ein Kraftfahrzeug verwendet werden.

Aus der DE 603 07 484 T2 ist ein Werkzeug bekannt, das zum Prägen von Rasten in ein Rohr einer Kopfstütze dient.

Vor dem Hintergrund einer angestrebten Minimierung des Kraftstoffverbrauchs ist die Verringerung des Gewichts von Kraftfahrzeugbauteilen von zentraler Bedeutung, ohne daß jedoch Einbuße hinsichtlich der Festigkeit hingenommen werden können. Die mechanische Beanspruchung eines Kopfstützbügels ist nicht überall gleich. Grenzen für die Wandstärke von aus Rohrteilen hergestellten Kopfstützen ergeben sich aus den einzuhaltenden Kriterien für das Bestehen der Crashversuche.

Der vorliegenden Erfindung liegt daher die Aufgabe zugrunde, ein Kopfstützen-Tragelement zum Verbinden einer Kopfstütze mit einem Sitz, insbesondere einem Kraftfahrzeugsitz, vorzuschlagen, das ein geringes Gewicht sowie gute Festigkeitseigenschaften aufweist und das einfach und kostengünstig herstellbar ist. Eine weitere Aufgabe liegt darin, ein Verfahren zur Herstellung eines solchen Kopfstützen-Tragelements vorzuschlagen.

Eine erfindungsgemäße Lösung besteht in einem Kopfstützen-Tragelement aus einem Rohrkörper, das an einem ersten Ende mit einem Sitz verbindbar ist und das an seinem zweiten Ende mit einer Kopfstütze verbindbar ist, um diese zu tragen, wobei der Rohrkörper aus flexibel gewalztem Bandmaterial, das eine variable Wandstärke aufweist, umformend hergestellt ist, wobei der Rohrkörper eine über dem Umfang variable Wandstärke aufweist, wobei in einem ersten Wandbereich mit einer über dem Umfang größeren Wandstärke Rastausnehmungen zum Fixieren gegenüber dem Sitz vorgesehen sind.

Das erfindungsgemäße Kopfstützen-Tragelement ist in vorteilhafter Weise hinsichtlich des Gewichts und der auftretenden Belastungen optimiert. Dabei hat das Kopfstützen-Tragelement zumindest einen ersten Wandbereich mit größerer Wandstärke, der insbesondere einer größeren Beanspruchung unterliegen kann, sowie zumindest einen zweiten Wandbereich mit kleinerer Wandstärke, der insbesondere einer kleineren Beanspruchung unterliegen kann. Durch diese Maßnahme werden zwei Vorteile erreicht. Zum einen läßt sich die Wandstärke an die spezifische Belastung des Bauteils anpassen, das heißt es findet eine auf die Beanspruchung im Crashfall optimierte Wandstärkenverteilung statt, wodurch die Sicherheit der Fahrzeuginsassen verbessert wird. Zum anderen läßt sich das Gesamtgewicht des Kopfstützen-Tragelements reduzieren, da die weniger belasteten zweiten Bereiche mit dünnerer Wandstärke ausgelegt werden können. Die Wandstärke ist über dem Umfang des Rohrkörpers variabel; die Wandstärke kann aber auch in Längs- und in Umfangsrichtung des Rohrkörpers variabel gestaltet werden.

Zur Erzeugung eines Rohrkörpers mit über der Länge unterschiedlichen Wandstärken wird vorzugsweise als Halbzeug ein Blechelement aus flexibel gewalztem Bandmaterial mit in Bandlängsrichtung variabler Wandstärke verwendet, das um die Bandlängsrichtung umgeformt wird. Dieses aus flexibel gewalztem Bandmaterial hergestellte Halbzeug wird auch als Tailor Rolled Blank (TRB) bezeichnet.

Zur Erzeugung eines Rohrkörpers mit über dem Umfang unterschiedlichen Wandstärken wird vorzugsweise als Halbzeug ein Blechelement aus flexibel gewalztem Bandmaterial mit quer zur Bandlängsrichtung variabler Wandstärke verwendet, das um die Bandlängsrichtung umgeformt wird. Zur Herstellung dieses Halbzeugs, das auch als Tailor Rolled Strip (TRS) bezeichnet wird, wird das Bandmaterial durch Rollprofilieren in Bandlängsrichtung umgeformt.

Zur Erzeugung eines Rohrkörpers mit über der Länge und über dem Umfang variabler Wandstärke wird das Bandmaterial nacheinander in Längsrichtung und in Querrichtung flexibel gewalzt.

Unabhängig von der Herstellung des Halbzeugs ist der als Ausgangsmaterial für das Kopfstützen-Tragelement dienende Rohrkörper vorzugsweise im Querschnitt geschlossen ausgebildet, wobei er nach dem Umformen in Längsrichtung verschweißt wird.

Zur Befestigung und Verrastung in einer Haltevorrichtung des Sitzes bzw. der Kopfstütze hat das Kopfstützen-Tragelement mehrere Rastausnehmungen über der Länge, wobei die Rastausnehmungen vorzugsweise in dem zumindest einen Wandbereich mit über dem Umfang größerer Wandstärke angeordnet sind. Dies hat den Vorteil, ein Ausreißen des Rohrkörpers bei der Herstellung der Rastausnehmungen verhindert wird. Weiter wird durch die vergrößerte Wandstärke eine verbesserte Maßhaltigkeit der Rastausnehmungen erreicht. Dies bewirkt wiederum, daß die für das Einschieben der Kopfstütze nötige Kraft erhöht ist, so daß die Insassensicherheit im Crashfall verbessert ist. Der Vorteil der Wandungsbereiche mit verringerter Wandstärke besteht in einer Gewichtsreduktion des Kopfstützen-Tragelements. Es kann sowohl eine einzige Reihe von Rastausnehmungen an einer Seite des Kopfstützen-Tragelements, aber auch zwei Reihen von Rastausnehmungen an verschiedenen Seiten des Kopfstützen-Tragelements eingearbeitet sein. Die Rastausnehmungen einer Reihe liegen vorzugsweise jeweils gleichmäßig verteilt hintereinander.

Nach einer nicht erfindungsgemäßen Ausführungsform umfaßt der erste Wandbereich mit größerer Wandstärke einen ersten Längsabschnitt, insbesondere einen Zylinderabschnitt. Der zweite Bereich mit kleinerer Wandstärke umfaßt vorzugsweise einen zweiten Längsabschnitt, insbesondere einen Zylinderabschnitt. Zwischen den beiden Abschnitten hat das Kopfstützen-Tragelement einen Übergangsabschnitt mit über der Länge veränderlichem Querschnitt, der sich insbesondere stetig ändert. Zwischen dem freien Ende des Kopfstützen-Tragelements und dem ersten Längsabschnitt mit vergrößerter Wandstärke kann ein weiterer Zylinderabschnitt gebildet sein, dessen Querschnitt über der Länge konstant ist. Bei der genannten Ausführungsform mit sich über der Länge änderndem Querschnitt hat der Rohrkörper über den Umfang vorzugsweise eine konstante Wandstärke.

Nach einer erfindungsgemäßen Ausführungsform ist der zumindest eine erste Wandbereich größerer Wandstärke - im Querschnitt betrachtet - in einem ersten Umfangsabschnitt des Rohrkörpers gebildet, an den sich in Umfangsrichtung ein zweiter Umfangsbereich mit kleinerer Wandstärke anschließt. Dabei befinden sich die Rastausnehmungen vorzugsweise in dem ersten Umfangsabschnitt mit größerer Wandstärke. Vorzugsweise hat das Kopfstützen-Tragelement zumindest über die Teillänge mit Rastausnehmungen eine kreiszylindrische Innenfläche und eine hierzu exzentrisch versetzte kreiszylindrische Außenfläche. Denkbar ist jedoch auch eine Ausgestaltung, bei der die Innenfläche kreiszylindrisch ist und die Außenfläche im Querschnitt ein Oval bildet. Dies wäre insbesondere günstig, wenn das Kopfstützen-Tragelement zwei umfangsversetzte Reihen von Rastausnehmungen aufweisen würde. Nach einer bevorzugten Ausgestaltung hat der Rohrkörper über seine gesamte Länge einen gleichbleibenden Querschnitt. Hieraus ergibt sich eine besonders günstige Fertigung. Das erfindungsgemäße Kopfstützen-Tragelement mit über dem Umfang variablen Wandbereichen ist vor allen auch im Hinblick auf die Insassensicherheit von Vorteil. In Wandbereichen mit hoher Belastung, insbesondere unmittelbar im Bereich der Einspannung des Tragelements an den Rastausnehmungen, ist die Wandstärke gegenüber anderen Bereichen erhöht. Auf diese Weise ist die Gefahr von Verletzungen im Crashfall minimiert.

Nach einer erfindungsgemäßen weiteren Ausführungsform kann vorgesehen sein, daß die Wandstärke des aus dem Rohrkörper hergestellten Kopfstützen-Tragelements sowohl in Längsrichtung als auch in Umfangsrichtung variabel ist. Durch diese Maßnahme ist ein Höchstmaß an Flexibilität hinsichtlich der Materialverteilung gegeben, so daß die Wandstärke an die Belastungen bei gleichzeitiger Gewichtsreduktion optimal angepaßt werden kann.

Nach einer bevorzugten Ausgestaltung, die für alle vorgenannten Ausführungsformen gilt, ist die Wandstärke der ersten Wandbereiche des Rohrkörpers mit vergrößerter Wandstärke etwa 1,5 mm bis 2,5 mm dick und beträgt insbesondere etwa 2 mm. Weiter weisen die zweiten Bereiche des Rohrkörpers mit verringerter Wandstärke vorzugsweise eine Wandstärke von 0,7 mm bis 1,3 mm auf, und sind insbesondere etwa 1,0 mm dünn. Durch diese Ausgestaltung wird die Steifigkeit in den kritischen Bereichen erhöht, wobei gleichzeitig durch Wandstärkenreduktion in weniger beanspruchten Bereichen Gewicht reduziert wird.

Das Kopfstützen-Tragelement ist insbesondere U-förmig oder L-förmig oder I-förmig gestaltet. Dabei haben die U-förmige oder L-förmigen Kopfstützen-Tragelemente jeweils zwei Schenkel zur Befestigung gegenüber dem Sitz, die über einen Verbindungssteg miteinander verbunden sind, an dem die Kopfstütze fixiert ist. Bei diesen Ausgestaltungen können beide Schenkel verdickte Wandbereiche aufweisen, das heißt einen symmetrischen Aufbau haben, der sich fertigungstechnisch einfach herstellen läßt. Es kann jedoch auch lediglich einer der beiden Schenkel einen verdickten Wandbereich aufweisen, das heißt einen asymmetrischen Aufbau haben, dessen Gewicht nochmals weiter reduziert ist. Das I-förmige Kopfstützen-Tragelement ist in Form einer Raststange gestaltet, wobei jeweils zwei parallele Raststangen gemeinsam ein Paar bilden, um eine Kopfstütze gemeinsam zu tragen. Von diesen kann eine, oder auch beide, eine variable Wandstärke gemäß der Erfindung aufweisen. Bei der Ausgestaltung als Raststange findet die Höhenverstellung vorzugsweise gegenüber der Kopfstütze statt. Das heißt die Raststangen eines Paares, die gemeinsam eine Kopfstütze tragen, sind gegenüber dem Sitz fixiert, wobei die Kopfstütze gegenüber den Raststangen höhenverstellbar ist.

Die Lösung der obengenannten Aufgabe besteht weiter in einem Verfahren zum Herstellen eines Kopfstützen-Tragelements nach einer der obigen Ausführungsformen mit folgenden Verfahrensschritten:
Herstellen eines Blechelements aus flexibel gewalztem Bandmaterial mit variabler Wandstärke;
Umformen des Blechelements zu einem Rohrkörper, wobei über dem Umfang erste Wandbereiche größerer Wandstärke und zweite Wandbereiche kleinerer Wandstärke gebildet werden. Hiermit werden die obengenannten Vorteile erzielt; und Einarbeiten von Rastausnehmungen in den Rohrkörper, wobei die Rastausnehmungen in den Wandbereichen mit über dem Umfang größerer Wandstärke eingearbeitet werden. Hiermit werden die obengenannten Vorteile erzielt.

Zur Herstellung eines Rohrkörpers mit über dem Umfang variabler Wanddicke wird als Halbzeug flexibel gewalztes Bandmaterial mit quer zur Bandlängsrichtung variabler Wandstärke (TRS) verwendet. Dabei wird durch anschließendes Umformen des Bandmaterials um die Bandlängsrichtung ein Rohrkörper mit über dem Umfang des Rohrkörpers variabler Wandstärke hergestellt.

Zur Herstellung eines Rohrkörpers mit über der Länge variabler Wanddicke wird als Halbzeug flexibel gewalztes Bandmaterial mit in Bandlängsrichtung variabler Wandstärke (TRB) verwendet. Dabei wird durch anschließendes Umformen des Bandmaterials um die Bandlängsrichtung ein Rohrkörper mit über der Länge des Rohrkörpers variabler Wandstärke hergestellt.

Zur Herstellung eines Rohrkörpers mit über dem Umfang und über der Länge variabler Wanddicke wird das Bandmaterial erst in Längsrichtung und dann in Querrichtung flexibel gewalzt, oder umgekehrt. Unabhängig von der Fertigung des Halbzeugs werden die freien Kanten des umgeformten Bandmaterials über der Länge vorzugsweise verschweißt, so daß ein im Querschnitt geschlossener Rohrkörper entsteht.

Das Einarbeiten der Rastausnehmungen in den Rohrkörper erfolgt vorzugsweise spanlos mittels Umformen, wobei spanende Fertigungsverfahren nicht ausgeschlossen sind. Bei der spanlosen Fertigung sind insbesondere folgende Teilschritte vorgesehen: Einführen eines Innendorns in den Rohrkörper, wobei der Innendorn zumindest eine seitliche Ausnehmung aufweist; Andrücken der Rohrwandung in die zumindest eine Ausnehmung des Innendorns, wobei zumindest eine Rastausnehmung in die Rohrwandung nach innen eingeformt wird; Drehen des Innendorns um seine Längsachse bis die zumindest eine Rastausnehmung außer Eingriff mit der zumindest einen Ausnehmung des Innendorns ist. Danach kann der Innendorn wieder aus Rohrkörper axial herausgezogen werden. Für dieses spanlose Fertigungsverfahren ist es insbesondere wichtig, daß das Rohrelement einen kreisrunden Innenquerschnitt aufweist, damit der Innendorn gegenüber dem Rohrelement verdreht werden kann. Nach dem Einbringen der Rastausnehmungen werden diese nachbearbeitet, beispielsweise mittels Schleifen.

Anschließend wird der Rohrkörper zum Kopfstützen-Tragelement gebogen und es werden die Enden des Kopfstützen-Tragelements bearbeitet. Abschließend wird eine Oberflächenbeschichtung vorgenommen.

Bevorzugte Ausführungsbeispiele werden nachstehend anhand der Zeichnungsfiguren erläutert. Hierin zeigen
- Figur 1: ein nicht erfindungsgemäßes Kopfstützen-Tragelement in einer ersten Aus- führungsform
a) in Seitenansicht;
b) im Längsschnitt;
c) teilweise im Längsschnitt;
- Figur 2: ein nicht erfindungsgemäßes Kopfstützen-Tragelement in einer zweiten Ausführungsform in perspektivischer Ansicht;
- Figur 3: ein nicht erfindungsgemäßes Kopfstützen-Tragelement in einer dritten Aus- führungsform in perspektivischer Ansicht;
- Figur 4: ein erfindungsgemäßes Kopfstützen-Tragelement in einer ersten Ausführungsform
a) in Seitenansicht;
b) im Querschnitt gemäß Schnittlinie B-B aus Figur 1a);
c) im Querschnitt gemäß Schnittlinie C-C aus Figur 1a);
d) teilweise in perspektivischer Ansicht;
- Figur 5: ein erfindungsgemäßes Kopfstützen-Tragelement in einer zweiten Ausführungsform in perspektivischer Ansicht;
- Figur 6: ein erfindungsgemäßes Kopfstützen-Tragelement in einer dritten Ausfüh- rungsform in perspektivischer Ansicht;
- Figur 7: ein nicht erfindungsgemäßes Kopfstützen-Tragelement in einer weiteren Ausführungsform
a) in Seitenansicht;
b) im Längsschnitt;
c) teilweise im Längsschnitt;
- Figur 8: schematisch eine Vorrichtung zum Einbringen von Rastausnehmungen in ein erfindungsgemäßes Kopfstützen-Tragelement während des Einbring- prozesses
a) im Längsschnitt;
b) den Dorn aus Figur 8a) in Axialansicht;
- Figur 9: die Vorrichtung aus Figur 8 nach dem Einbringprozeß
a) im Längsschnitt;
b) den Dorn in Axialansicht;

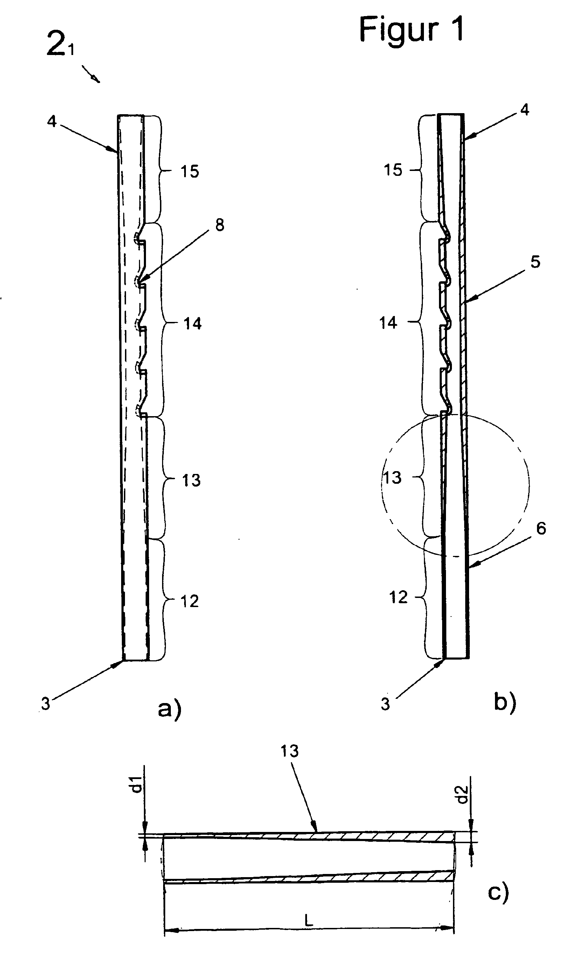

Die Figuren 1 bis 6 werden hinsichtlich ihrer übereinstimmenden Merkmale zunächst gemeinsam beschrieben.

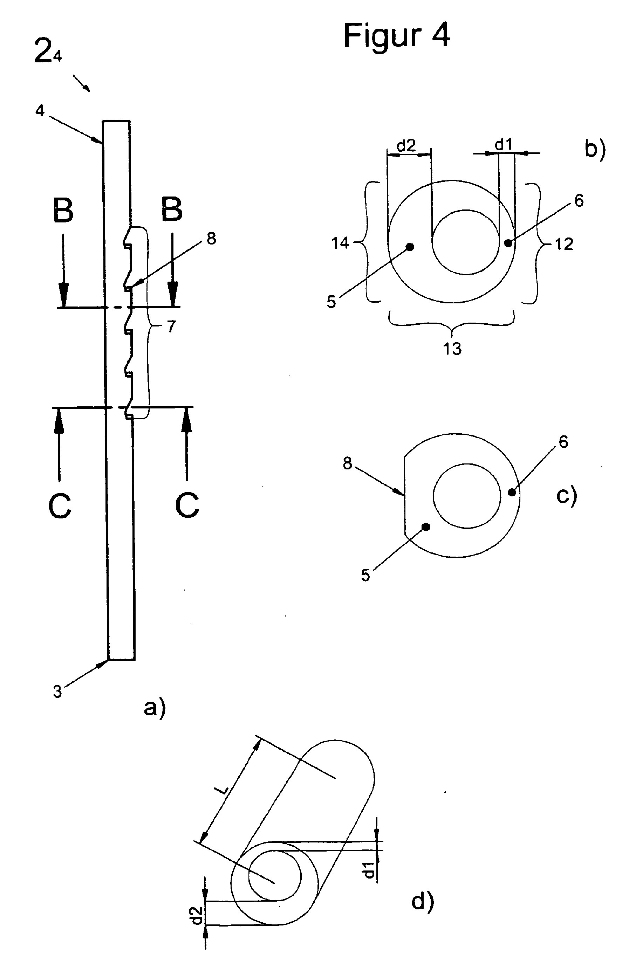

Es ist jeweils ein Kopfstützen-Tragelement 2 ersichtlich, das aus einem Rohrkörper hergestellt ist und einerseits mit einem unteren ersten Ende 3 zur Verbindung mit einem Sitz in eine nicht dargestellte Haltevorrichtung eingeführt werden kann, und das andererseits eine nicht dargestellte Kopfstütze tragen kann. Der als Ausgangsmaterial dienende Rohrkörper ist aus flexibel gewalztem Bandmaterial mit in Bandlängsrichtung variabler Wandstärke durch Umformen hergestellt. Der Rohrkörper ist im Querschnitt geschlossen, wobei die freien Kanten des zum Rohrkörper umgeformten Blechelements miteinander über ihre Länge verschweißt sind. Das Kopfstützen-Tragelement 2 hat zumindest einen ersten Wandbereich 5 mit größerer Wandstärke d2, der einer größeren Beanspruchung unterliegt, sowie zumindest einen zweiten Wandbereich 6 mit kleinerer Wandstärke d1, der einer kleineren Beanspruchung unterliegt. In einer nicht erfindungsgemäßen Ausführungsform können sich die ersten und zweiten Wandbereiche 5, 6 in Längsrichtung des Kopfstützen-Tragelements erstrecken bei jeweils konstanter Wandstärke über dem Querschnitt (Figuren 1 bis 3). Sie erstrecken sich erfindungsgemäß in Umfangsrichtung des rohrförmigen Kopfstützen-Tragelements, möglicherweise bei über der Länge gleichbleibendem Querschnitt (Figuren 4 bis 6); es sind grundsätzlich jedoch auch Ausführungsformen denkbar, bei denen das Kopfstützen-Tragelement in Längs- und in Umfangrichtung eine veränderliche Wandstärke aufweist, die allerdings nicht dargestellt sind.

Die in den Figuren 1 bis 3 nicht erfindungsgemäßen gezeigten Stützelemente 2, die hinsichtlich ihrer übereinstimmenden Merkmale zunächst gemeinsam beschrieben werden, sind aus einem Rohrkörper vorzugsweise durch Umformen des Bandmaterials eines Tailor Rolled Blank um die Bandlängsrichtung hergestellt, so daß die Wandstärke über die Länge des Rohrkörpers variabel ist. Das Kopfstützen-Tragelement 2 hat verschiedene axial aneinander anschließende Längsabschnitte mit unterschiedlichen Wandstärken d1, d2. Dabei ist die Wandstärke - jeweils im Querschnitt durch das Kopfstützen-Tragelement betrachtetet - über dem Umfang konstant. Über die axiale Erstreckung der Rastausnehmungen 8 ist ein erster Wandbereich 5 mit größerer Wandstärke d2 gebildet, während hierzu benachbart jeweils zweite Wandbereiche 6 mit kleinerer Wandstärke d1 gebildet sind. Durch diese Maßnahme wird gewährleistet, daß im Bereich höherer Belastungen des Kopfstützen-Tragelements 2 eine höhere Steifigkeit und Festigkeit gegeben ist, so daß die Anforderungen für das Bestehen von Crashversuchen erfüllt werden. Außerdem wird durch die vergrößerte Wandstärke eine höhere Präzision beim Einbringen der Rastausnehmungen 8 und damit eine verbesserte Maßhaltigkeit erreicht. Hiermit wird gewährleistet, daß die für das Einschieben der Kopfstütze nötige Kraft einen gewissen Schwellenwert sicher erreichen muß, so daß die Insassensicherheit im Crashfall erhöht ist.

Im folgenden wird auf die Besonderheiten der unterschiedlichen nicht erfindungsgemäßen Beispiele gemäß den Figuren 1 bis 3 eingegangen.

Das in Figur 1 gezeigte Kopfstützen-Tragelement 2₁ ist in Form einer rohrförmigen Raststange gestaltet. Jeweils zwei solcher Raststangen tragen eine Kopfstütze und verbinden diese mit dem Sitz. Dabei werden die Raststangen mit ihren unteren zweiten Enden 3 gegenüber einer nicht dargestellte Haltevorrichtung des Sitzes fixiert, während die oberen zweiten Enden 4 der Raststangen die Kopfstütze tragen. Dabei kann sowohl lediglich eine einzige der beiden Raststangen 2₁ mit Rastausnehmungen 8 versehen sein; es können aber auch beide Raststangen 2₁ mit Rastausnehmungen 8 ausgestattet sein. Bei dem vorliegenden Beispiel mit Raststangen ist vorgesehen, daß das Kopfstützpolster gegenüber den Raststangen höhenverstellbar ist, während die Raststangen gegenüber dem Sitz festgehalten sind. Insofern sind innerhalb des Kopfstützpolsters Halteelemente vorgesehen, die mit den Rastausnehmungen der Raststangen zusammenwirken. Der Querschnitt des als Ausgangsmaterial dienenden Rohrkörpers ist über die Länge L der Raststange variabel. Das Kopfstützen-Tragelement 2 hat einen zylindrischen Endabschnitt 12, dessen Wandstärke d1 konstant ist und vorzugsweise etwa 1 mm beträgt. An den Endabschnitt 12 schließt ein erster Übergangsabschnitt 13 an, dessen Wandstärke sich in Richtung zum ersten Längsabschnitt 14 über der Länge auf etwa 2 mm stetig vergrößert, wobei die Innenfläche insbesondere konisch gestaltet ist. Der Längsabschnitt 14 bildet den ersten Wandbereich 5 mit vergrößerter Wandstärke, in dem die Rastausnehmungen 8 vorgesehen sind. Oberhalb des ersten Längsabschnittes 14 verjüngt sich die Wandstärke in einem weiteren Übergangsbereich 15 wieder stetig, bis eine Wandstärke d1 von 1 mm erreicht ist.

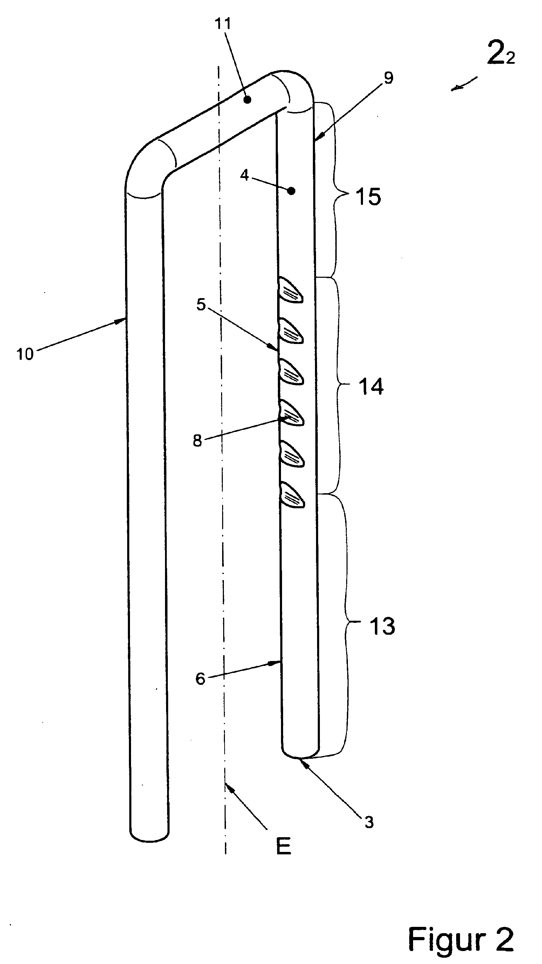

Das in Figur 2 gezeigt Kopfstützen-Tragelement 2₂ entspricht weitestgehend dem in Figur 1 gezeigten Kopfstützen-Tragelement, wobei gleiche Einzelheiten mit gleichen Bezugsziffern versehen sind. Insoweit wird auf die obige Beschreibung Bezug genommen. Der einzige Unterschied liegt darin, daß das vorliegende Kopfstützen-Tragelement in Form eines U-förmigen Bügels gestaltet ist, der zwei in etwa parallele Schenkel 9,10 sowie eine diese miteinander verbindenden Verbindungssteg 11 aufweist. Die beiden Schenkel 9, 10 sind mit ihren unteren zweiten Enden 3 in eine Haltevorrichtung des Sitzes eingesteckt, während das Kopfstützpolster am oberen Abschnitt 4, 11 des Kopfstützenbügels angebracht ist. Bei dem vorliegenden Beispiel ist vorgesehen, daß das Kopfstützpolster gegenüber dem Kopfstützbügel fixiert ist, während der Kopfstützenbügel gegenüber dem Sitz höhenverstellbar ist. Insofern sind hier innerhalb des Sitzes Halteelemente vorgesehen, die mit den Rastausnehmungen der Raststangen zusammenwirken. Es ist ersichtlich, daß einer der Stege 9 innerhalb seines Längsabschnittes 14 seitlich nach innen gerichtete Rastausnehmungen 8 aufweist, während der gegenüberliegende Schenkel 10 ohne entsprechende Rastausnehmungen gestaltet ist. Die Schenkel 9, 10 weisen zwischen ihren freien Enden 3 und dem Längsabschnitt 14 jeweils einen Übergangsabschnitt 13 auf, innerhalb dem sich die Wandstärke über die Länge insbesondere stetig erhöht. Unterhalb der untersten Rastausnehmung 8 beginnt der erste Längsabschnitt 14, der eine konstante Wandstärke von etwa 2 mm aufweist und oberhalb der obersten Rastausnehmung 8 endet. Oberhalb des Längsabschnitts 14 verjüngt sich die Wandstärke wieder in einem Übergangsabschnitt 15 von 2 mm stetig auf beispielsweise 1 mm. Der die beiden Schenkel 9, 10 miteinander verbindende Verbindungssteg 11 hat eine gleichbleibend reduzierte Wandstärke. Der Außendurchmesser des Kopfstützen-Tragelements 2₂ ist über sein gesamte Länge konstant, d.h. Wanddickenänderungen werden nach innen aufgetragen. Vorzugsweise hat das Kopfstützen-Tragelement 2₂ einen kreisrunden Außenquerschnitt und einen kreisrunden Innenquerschnitt. Es ist jedoch auch prinzipiell denkbar, das insbesondere der Außenquerschnitt oval gestaltet ist, d.h. die Wanddickenänderung nach außen aufgetragen ist.

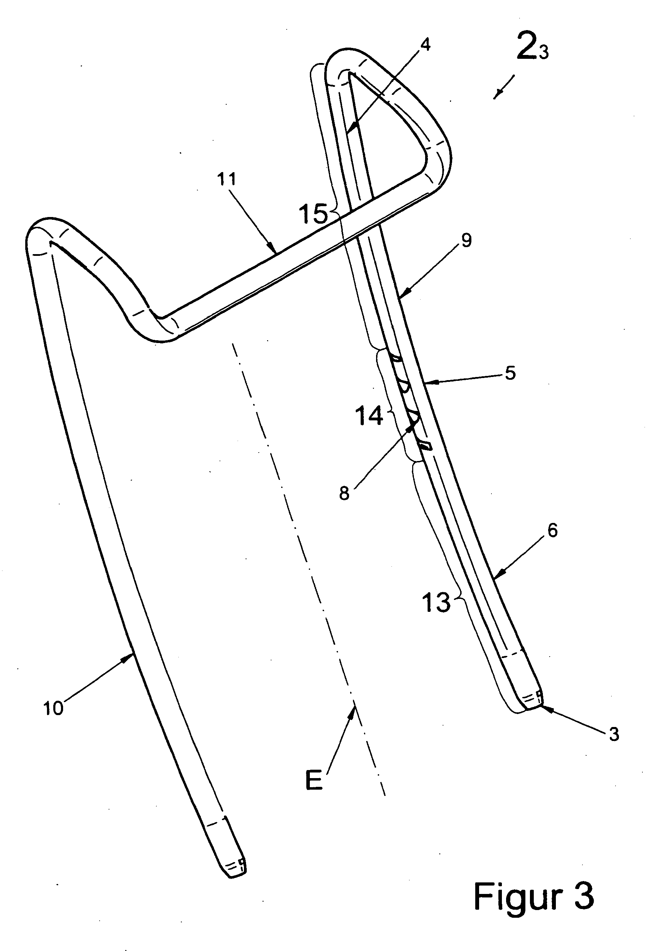

Figur 3 zeigt ein Kopfstützen-Tragelement 2₃ in einem weiteren Beispiel. Dieser entspricht weitestgehend dem jenigen aus Figur 2 auf deren Beschreibung insoweit Bezug genommen wird. Das hier gezeigte bügelförmige Kopfstützen-Tragelement 2₃ kennzeichnet sich dadurch, daß es in Seitenansicht etwa L-förmig gestaltet ist. Derartige Kopfstützen-Tragelemente 2₃ dienen zum Einsatz von versenkbaren Kopfstützen, die insbesondere an den hinteren Sitzen eines Kraftfahrzeugs eingesetzt werden. Auch bei der vorliegenden Ausführungsform befinden sich die Rastausnehmungen 8 lediglich an einem Schenkel 9, und zwar auf der Innenseite. Der gegenüberliegende Schenkel 10 hat eine glatte Außenfläche. Die Wanddickenverläufe über der Länge in den beiden Schenkel 9, 10 entsprechen demjenigen aus Figur 2.

Die erfindungsgemäß in den Figuren 4 bis 6 gezeigten Stützelemente 2 sind aus einem Rohrkörper vorzugsweise durch Umformen des Bandmaterials eines Tailor Rolled Strip in Bandlängsrichtung hergestellt, so daß die Wandstärke über dem Umfang des Rohrkörpers variabel ist. Der erste Wandbereich 5 umfaßt einen ersten Umfangsabschnitt 14 mit größerer Wandstärke d2 und der zweite Wandbereich 6 umfaßt einen hierzu gegenüberliegenden zweiten Umfangsabschnitt 12 mit kleinerer Wandstärke d1. Die Wandstärke geht im Querschnitt vom Umfangsabschnitt 12 mit geringster Wandstärke d1 zum Umfangsabschnitt 14 mit maximaler Wandstärke d2 jeweils stetig über. Dabei beträgt die maximale Wandstärke d2 etwa 2 mm, während die minimale Wandstärke d1 etwa 1 mm beträgt, wobei diese Werte nur beispielhaft sind. Das Kopfstützen-Tragelement 2 hat einen ersten Längsabschnitt 7, in dem seitlich Ratsausnehmungen 8 übereinander eingearbeitet sind, die zum Verrasten in einer entsprechenden Haltevorrichtung des Sitzes bzw. des Kopfstützpolsters vorgesehen sind. Die Rastausnehmungen 8 sind über die Länge des ersten Längsabschnitts 7 gleichmäßig verteilt und befinden sich im ersten Wandbereich 5 des Kopfstützen-Tragelements 2 mit vergrößerter Wandstärke d2. Der den Rastausnehmungen 8 gegenüberliegende Seitenbereich 6 des Kopfstützen-Tragelements 2 ist auf die Beanspruchung im Crashfall hin optimiert, so daß das Kopfstützen-Tragelement 2 insgesamt ein geringes Gewicht aufweist. Der als Ausgangsmaterial für das erfindungsgemäße Kopfstützen-Tragelement 2 dienende Rohrkörper hat über seiner Länge einen konstanten Querschnitt, was insbesondere in Figur 1d) ersichtlich ist. Dabei sind sowohl der Außenquerschnitt als auch der Innenquerschnitt kreiszylindrisch gestaltet. Es ist jedoch auch prinzipiell auch denkbar, daß insbesondere der Außenquerschnitt unrund ausgestaltet ist.

Während bei den gezeigten Ausführungsbeispielen die Kopfstützen-Tragelemente 2 lediglich an einer Seite mehrer Rastausnehmungen 8 in Reihe übereinander aufweisen, sind Ausführungsbeispiele ebenso möglich, bei denen an zwei entgegengesetzt gerichteten Umfangsbereichen entsprechende Rastausnehmungen vorgesehen sind. In diesem Fall wäre die Wandstärke - im Querschnitt betrachtet - entsprechend an beiden Umfangsbereichen mit Rastausnehmungen vergrößert. Der Außenquerschnitt wäre in diesem Fall oval.

Im folgenden wird auf die Besonderheiten der unterschiedlichen Ausführungsbeispiele gemäß den Figuren 4 bis 6 eingegangen.

Das in Figur 4 gezeigte Kopfstützen-Tragelement 2₄ ist in Form einer rohrförmigen Raststange gestaltet. Jeweils zwei solcher Raststangen bilden ein Paar und tragen gemeinsam ein Kopfstützpolster, um dieses mit dem Sitz zu verbinden. Dabei kann sowohl lediglich eine einzige der beiden Raststangen 2₄ mit Rastausnehmungen 8 versehen sein; es können aber auch beide Raststangen 2₄ mit Rastausnehmungen 8 ausgestattet sein. Der Querschnitt des als Ausgangsmaterial dienenden Rohrkörpers ist über die Länge L der Raststange konstant. Hinsichtlich seiner äußeren Gestalt entspricht das Kopfstützen-Tragelement 2₄ gemäß der vorliegende Ausführungsform demjenigen nach Figur 1, so daß hinsichtlich der Gemeinsamkeiten auf die obige Beschreibung Bezug genommen werden kann.

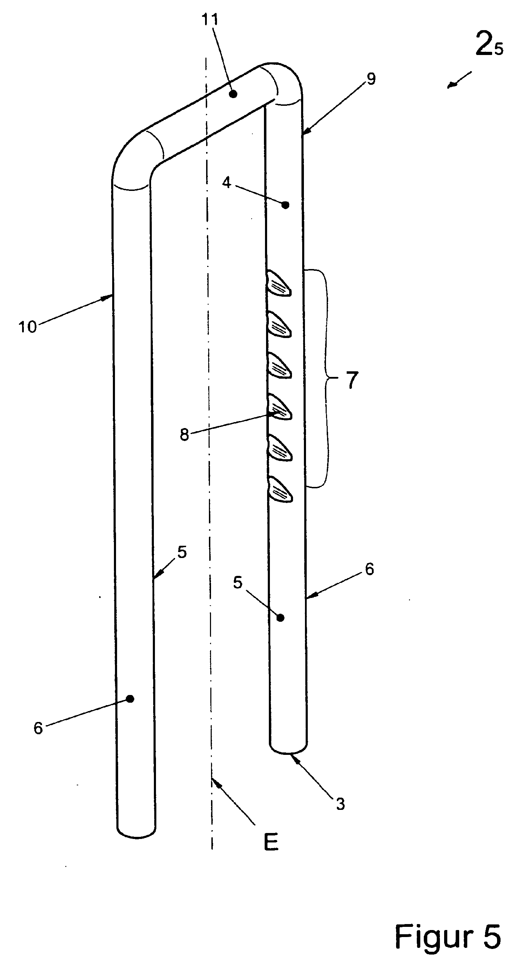

Das in Figur 5 gezeigt Kopfstützen-Tragelement 2₅ entspricht weitestgehend dem in Figur 4 gezeigten Kopfstützen-Tragelement, wobei gleiche Einzelheiten mit gleichen Bezugsziffern versehen sind. Insoweit wird auf die obige Beschreibung Bezug genommen. Der einzige Unterschied liegt darin, daß das vorliegende Kopfstützen-Tragelement in Form eines U-förmigen Bügels gestaltet ist, der zwei in etwa parallele Schenkel 9,10 sowie eine diese miteinander verbindenden Verbindungssteg 11 aufweist. Es ist ersichtlich, daß einer der Stege 9 innerhalb seines Längsabschnittes 7 seitlich nach innen gerichtete Rastausnehmungen 8 aufweist, während der gegenüberliegende Schenkel 10 ohne entsprechende Rastausnehmungen gestaltet ist. Auch hier hat der als Ausgangsmaterial dienende Rohrkörper über seine Länge einen konstanten Querschnitt. Dabei ist der Umfangsbereich 5 mit dickerer Wandstärke d2 in Bezug auf den Biegeverlauf des Bügels an einer Innenseite des Bügels angeordnet. Bei Kopfstützen-Tragelementen, bei denen die Rastausnehmungen an einer Außenseite des Bügels anzuordnen sind, wäre die dickere Wandstärke d2 entsprechend außen vorzusehen. Hinsichtlich der Arretierung gegenüber dem Sitz einerseits bzw. dem Kopfstützpolster andererseits entspricht das vorliegende Kopfstützen-Tragelement 2₅ demjenigen nach Figur 2, so daß in diesem Zusammenhang auf die obige Beschreibung Bezug genommen werden kann.

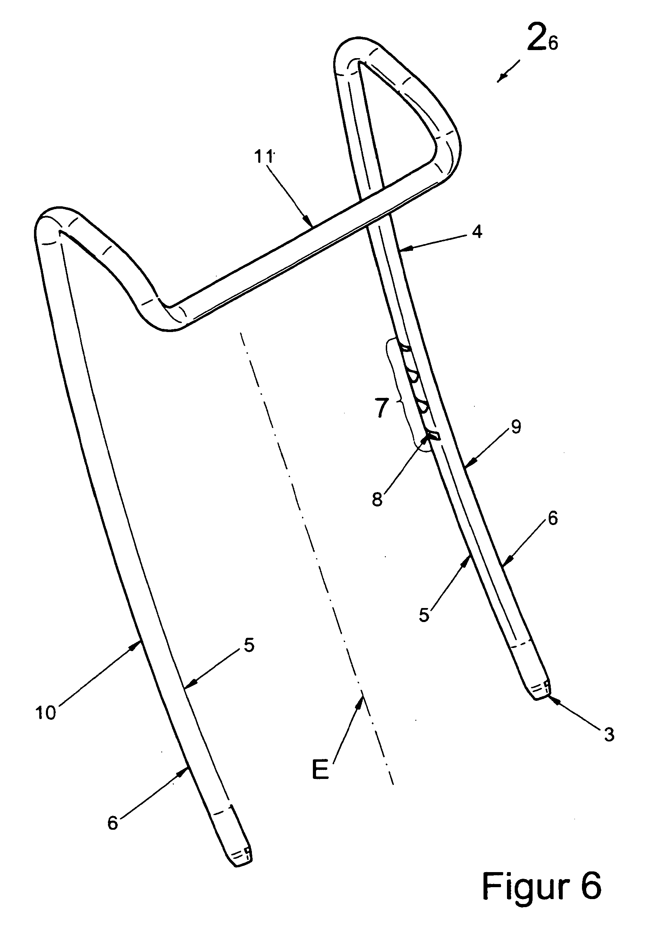

Figur 6 zeigt ein Kopfstützen-Tragelement 2₆ in einer weiteren Ausführungsform. Diese entspricht weitestgehend derjenigen aus Figur 5 auf deren Beschreibung insoweit Bezug genommen wird. Das hier gezeigte bügelförmige Kopfstützen-Tragelement 2₆ kennzeichnet sich dadurch, daß es in Seitenansicht etwa L-förmig gestaltet ist. Derartige Kopfstützen-Tragelemente 2₆ dienen zum Einsatz von versenkbaren Kopfstützen, die insbesondere an den hinteren Sitzen eines Kraftfahrzeugs eingesetzt werden. Auch bei der vorliegenden Ausführungsform befinden sich die Rastausnehmungen 8 lediglich an einem Schenkel 9, und zwar auf der Innenseite. Der gegenüberliegende Schenkel 10 hat eine glatte Außenfläche.

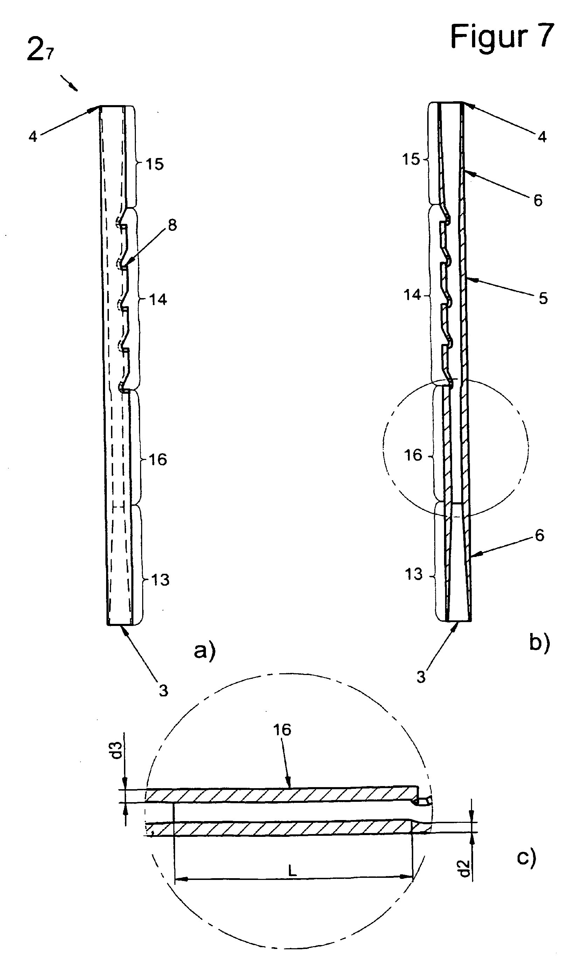

Das in Figur 7 nicht erfindungsgemäße gezeigte Kopfstützen-Tragelement 2₇ entspricht weitestgehend dem in Figur 1 gezeigten Kopfstützen-Tragelement, wobei gleiche Einzelheiten mit gleichen Bezugsziffern versehen sind. Insoweit wird auf die obige Beschreibung Bezug genommen. Der einzige Unterschied besteht darin, daß vorliegend unterhalb des ersten Längsabschnitts 14 ein weiterer Längsabschnitt 16 anschließt, der etwa zylindrisch gestaltet ist und eine gegenüber der Wandstärke d2 nochmals vergrößerte Wandstärke d3 aufweist. An diesen verdickten Längsabschnitt 16 schließt sich ein Übergangsabschnitt 13 an, dessen Wandstärke sich in Richtung zum Ende 3 stetig verjüngt, wobei die Innenfläche insbesondere konisch gestaltet ist. Der weitere Längsabschnitt 16 mit maximaler Wandstärke d3 hat den Vorteil, daß hohe Belastungen im Crashfall aufgenommen werden können, so daß die Gefahr von Verletzungen der Fahrzeuginsassen minimiert ist. Selbstverständlich können auch die übrigen Kopfstützen-Tragelemente gemäß den Figuren 2 bis 6 Wandungsabschnitte mit einer nochmals verdickten Wandstärke in Bereichen hoher Belastung ausgestattet sein.

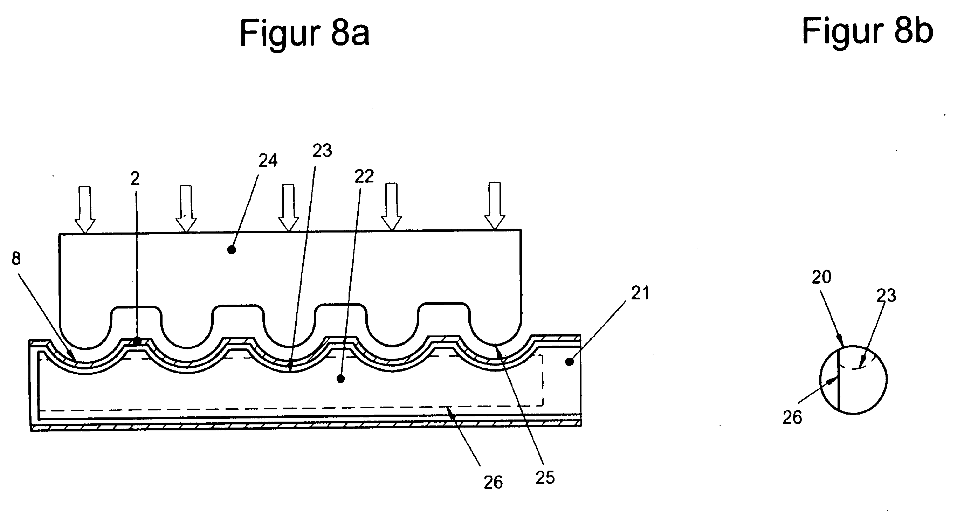

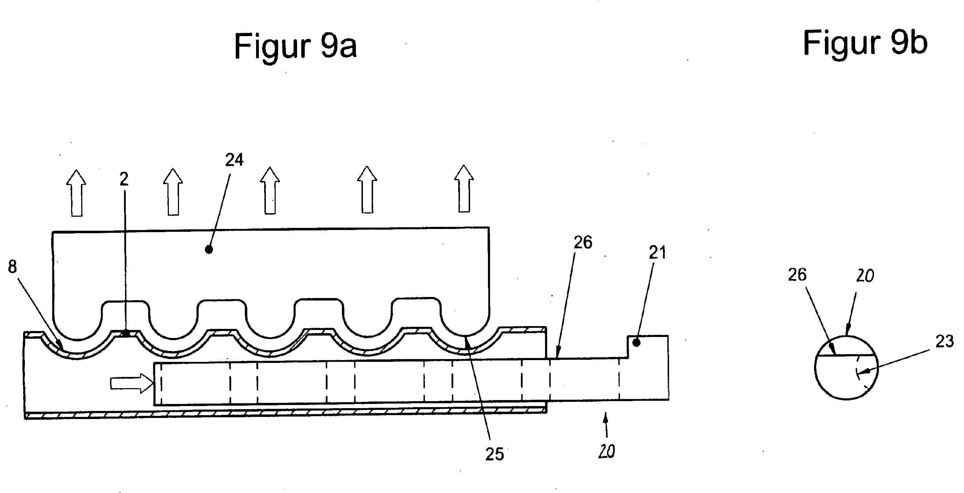

Die Figuren 8 und 9 werden im folgenden gemeinsam beschrieben. Es ist schematisch eine Vorrichtung zum Herstellen von Rastausnehmungen 8 in ein Kopfstützen-Tragelement 2 gezeigt. Die einzelnen Verfahrensschritte werden im Nachfolgenden kurz erläutert.

Nach dem Herstellen des Rohrkörpers als Ausgangsmaterial wird in das freie Ende 3 ein Innendorn 20 eingeführt. Der Innendorn 20 hat einen kreiszylindrischen ersten Abschnitt 21, an dessen Ende ein Stützabschnitt 22 mit von der Kreisform abweichenden Querschnitt axial anschließt. Der Stützabschnitt 22 hat an seiner Außenfläche eine der Anzahl der in das Kopfstützen-Tragelement 2 einzubringenden Rastausnehmungen entsprechende Anzahl von Vertiefungen 23 die zum Erzeugen der Rastausnehmungen 8 dienen.

Neben dem Innendorn 20 umfaßt die Vorrichtung zum Herstellen der Rastausnehmungen einen Stempel 24, der eine Mehrzahl von Vorsprüngen 25 aufweist, deren Anzahl vorzugsweise der Anzahl der herzustellenden Rastausnehmungen entspricht. Der Stempel 24 wird, nachdem der Innendorn 20 in das Stützelement 2 eingeschoben worden ist, von außen radial nach innen beaufschlagt. Bei diesem Andrückvorgang, der in Figur 8a) durch die Pfeile veranschaulicht wird, wird die Wandung des Kopfstützen-Tragelements 2 in die Vertiefungen 23 des Innendorns 20 nach radial innen gedrückt, so daß die Rastausnehmungen 8 eingeformt werden und dabei eine definierte Kontur erhalten.

Der Innendorn 20 stützt den eingeformten Wandungsabschnitt nach innen hin ab und gewährleistet somit ein definiertes plastisches Verformen bei der Erzeugung der Rastausnehmungen. Dadurch, daß in den Bereichen 5 der Rastausnehmungen 8 eine größere Wandstärke d2 vorgesehen ist, ist der Fertigungsprozeß des Einbringens von Rastausnehmungen wesentlich präziser, so daß der Arbeitsaufwand für die Nachbearbeitung reduziert wird. Außerdem wird durch die verbesserte Maßhaltigkeit der Rastausnehmungen ein erhöhter Insassenschutz erreicht.

Nach dem Einformen der Rastausnehmungen 8 wird der der Stempel 24 wieder nach radial außen bewegt, und der Innendorn 20 wird gegenüber dem Kopfstützen-Tragelement 2 soweit gedreht, bis die Vertiefungen 23 außer Eingriff mit den nach innen gewölbten Wandungsabschnitten ist. Dann kann der Innendorn 20 aus dem Kopfstützen-Tragelement 2 wieder herausgefahren werden, was in Figur 9 gezeigt ist. Damit der Innendorn 20 relativ zum Tragelement 2 verdreht werden kann, hat dieser eine sich längs erstreckende Abflachung 26, die in Figur 8 als gestrichelte Linie dargestellt ist. Die Abflachung 26 ist gegenüber den Vertiefungen 23 um 90° in Umfangsrichtung versetzt angeordnet, so daß der Innendorn 20 nach dem Einformen der Rastausnehmungen 8 um 90° verdreht und dann aus dem Kopfstützen-Tragelement 2 herausgezogen wird.

Nach dem Einarbeiten der Rastausnehmungen 8 wird der Rohrkörper durch Umformen zu dem erfindungsgemäßen Kopfstützen-Tragelement 2 umgebogen, beispielsweise zu einer Raststange gemäß den Figuren 1, 4 oder 7, oder zu einem U-förmigen Bügel gemäß den Figuren 2 bzw. 5, oder zu einem L-förmigen Bügel gemäß den Figuren 3 bzw. 6. Anschließend werden die Enden 3 des Kopfstützen-Tragelements 2 bearbeitet, das heißt mit einer Fase versehen. Zuletzt wird das Kopfstützen-Tragelement 2 oberflächenbehandelt.

### Bezugszeichenliste

- 2: Kopfstützen-Tragelement
- 3: erstes Ende
- 4: zweites Ende
- 5: erster Wanddickenbereich
- 6: zweiter Wanddickenbereich
- 7: Längsabschnitt
- 8: Rastausnehmung
- 9: erster Schenkel
- 10: zweiter Schenkel
- 11: Verbindungssteg
- 12: Endabschnitt
- 13: Übergangsabschnitt
- 14: Längsabschnitt
- 15: Übergangsabschnitt
- 16: Längsabschnitt
- 20: Innendorn
- 21: erster Abschnitt
- 22: Stützabschnitt
- 23: Vertiefung
- 24: Stempel
- 25: Vorsprung
- 26: Abflachung
- E: Symmetrieebene

## Patentansprüche

1. Kopfstützen-Tragelement (2) aus einem Rohrkörper, das einerseits mit einem Sitz verbindbar ist und das andererseits mit einer Kopfstütze verbindbar ist, wobei der Rohrkörper aus flexibel gewalztem Bandmaterial, das eine variable Wandstärke aufweist, umformend hergestellt ist,
**dadurch gekennzeichnet,**
**daß** der Rohrkörper eine über dem Umfang variable Wandstärke aufweist, wobei in einem ersten Wandbereich (5) mit einer über dem Umfang größeren Wandstärke (d2) Rastausnehmungen (8) zum Fixieren gegenüber dem Sitz vorgesehen sind.

2. Kopfstützen-Tragelement nach Anspruch 1,
**dadurch gekennzeichnet,**
**daß** zumindest ein erster Wandbereich (5) mit einer größeren Wandstärke (d2) und zumindest ein zweiter Wandbereich (6) mit einer kleineren Wandstärke (d1) gebildet ist.

3. Kopfstützen-Tragelement nach Anspruch 2,
**dadurch gekennzeichnet,**
**daß** der erste Wandbereich (5) einen ersten Umfangsabschnitt (14) mit vergrößerter Wandstärke (d2) umfaßt, und daß der zweite Wandbereich (6) einen zweiten Umfangsabschnitt (12) mit kleinerer Wandstärke (d1) umfaßt.

4. Kopfstützen-Tragelement nach Anspruch 3,
**dadurch gekennzeichnet,**
**daß** die Rohrwandung vom ersten Umfangsabschnitt (14) mit maximaler Wandstärke (d2) zum zweiten Umfangsabschnitt (12) mit minimaler Wandstärke (d1) - im Querschnitt betrachtet - sich in Umfangsrichtung stetig verändert.

5. Kopfstützen-Tragelement nach einem der Ansprüche 2 bis 4,
**dadurch gekennzeichnet,**
**daß** der Rohrkörper zumindest über eine Teillänge im Bereich der Rastausnehmungen (8) eine kreiszylindrische Innenfläche aufweist.

6. Kopfstützen-Tragelement nach einem der Ansprüche 2 bis 5,
**dadurch gekennzeichnet,**
**daß** Wandstärkendifferenz zwischen dem ersten Wandbereich (5) größerer Wandstärke (d2) und dem zweiten Wandbereich (6) kleinerer Wandstärke (d1) zwischen 30 % und 70 % bezogen auf die maximale Wandstärke (d2) beträgt.

7. Kopfstützen-Tragelement nach einem der Ansprüche 1 bis 6,
**dadurch gekennzeichnet,**
**daß** es als Raststange gestaltet ist, die mit einer weiteren Raststange ein Paar bildet, die gemeinsam die Kopfstütze tragen.

8. Kopfstützen-Tragelement nach einem der Ansprüche 1 bis 7,
**dadurch gekennzeichnet,**
**daß** es als Bügel gestaltet ist, der zwei Schenkel (9, 10) und einen diese miteinander verbindenden Verbindungssteg (11) aufweist.

9. Kopfstützen-Tragelement nach einem der Ansprüche 1 bis 8, **dadurch gekennzeichnet, daß** der Rohrkörper zusätzlich in der Längsrichtung eine veränderliche Wandstärke aufweist.

10. Verfahren zum Herstellen eines Kopfstützen-Tragelements nach einem der Ansprüche 1 bis 9,
**gekennzeichnet durch** die folgenden Verfahrensschritte:
Herstellen eines Blechelements aus flexibel gewalztem Bandmaterial mit variabler Wandstärke;
Umformen des Blechelements zu einem Rohrkörper, wobei über dem Umfang erste Wandbereiche (5) größerer Wandstärke (d2) und zweite Wandbereiche (6) kleinerer Wandstärke (d 1) gebildet werden; und
Einarbeiten von Rastausnehmungen (8) in den Rohrkörper, wobei die Rastausnehmungen (8) in den Wandbereichen (5) mit über dem Umfang größerer Wandstärke (d2) eingearbeitet werden.

11. Verfahren nach Anspruch 10,
**dadurch gekennzeichnet, daß** der Verfahrensschritt des Einarbeitens der Rastausnehmungen (8) folgende Teilschritte umfaßt:
Einführen eines Innendorns (20) in den Rohrkörper, wobei der Innendorn (20) zumindest eine seitliche Ausnehmung (23) aufweist;
Andrücken der Rohrwandung in die zumindest eine Ausnehmung (23) des Innendorns (20), wobei zumindest eine Rastausnehmung (8) in die Rohrwandung nach innen eingeformt wird;
Drehen des Innendorns (20) um seine Längsachse bis die zumindest eine Rastausnehmung (8) außer Eingriff mit der zumindest einen Ausnehmung (23) des Innendorns ist.

## Claims

1. A head rest supporting element (2) consisting of a tubular member which, on the one hand, can be connected to a seat and which, on the other hand, can be connected to a head rest, wherein the tubular member is formingly produced from a flexibly rolled band material with a variable wall thickness,
**characterised in**
**that** the tubular member comprises a circumferentially variable wall thickness wherein, in a first wall region (5) with a circumferentially larger wall thickness (d2), there are provided engagement recesses (8) to permit the tubular member to be fixed relative to the seat.

2. A head rest supporting element according to claim 1,
**characterised in**
**that** there is formed at least one first wall region (5) with a greater wall thickness (d2) and at least one second wall region (6) with a smaller wall thickness (d1).

3. A head rest supporting element according to claim 2,
**characterised in**
**that** the first wall region (5) comprises a first circumferential portion (14) with an increased wall thickness (d2) and that the second wall region (6) comprises a second circumferential portion (12) with a smaller wall thickness (d1).

4. A head rest supporting element according to claim 3,
**characterised in**
**that** from the first circumferential portion (14) with a maximum wall thickness (d2) to the second circumferential portion (12) with a minimum wall thickness (d1), the tube wall continuously varies in the circumferential direction if seen in a cross-sectional view.

5. A head rest supporting element according to any one of claims 2 to 4,
**characterised in**
**that** at least along a partial length, in the region of the engagement recesses (8), the tubular member comprises a circular-cylindrical inner face.

6. A head rest supporting element according to any one of claims 2 to 5,
**characterised in**
**that** the difference in wall thickness between the first wall region (5) with the greater wall thickness (d2) and the second wall region (6) with the smaller wall thickness (d1) amounts to a value between 30% and 70% with reference to the maximum wall thickness (d2).

7. A head rest supporting element according to any one of claims 1 to 6,
**characterised in**
**that** it is provided in the form of an engageable rod which, together with a further engageable rod, forms a pair which carries the head rest.

8. A head rest supporting element according to any one of claims 1 to 7,
**characterised in**
**that** it is provided in the form of a stirrup-shaped element which comprises two arms (9, 10) and a connecting web (11) connecting said two arms to one another.

9. A head rest supporting element according to any one of claims 1 to 8,
**characterised in**
**that** the tubular member, in addition, comprises a variable wall thickness in the longitudinal direction.

10. A process of producing a head rest supporting element
according to any one of claims 1 to 9,
**characterised by** the following process stages:
producing a sheet metal element out of a flexibly rolled band material with a variable wall thickness;
forming the sheet metal element into a tubular member wherein, around the circumference, there are formed first wall regions (5) with a greater wall thickness (d2) and second wall regions (6) with a smaller wall thickness (d1); and
forming engagement recesses (8) into the tubular member, wherein the engagement recesses (8) are worked into the wall regions (5) with larger wall thickness (d2) over the circumference.

11. A process according to claim 10,
**characterised in that** the process stage of working in the engagement recesses (8) comprises the following partial process stages:
introducing an inner mandrel (20) into the tubular member, wherein the inner mandrel (20) comprises at least one lateral recess (23);
pressing the tube wall into the at least one recess (23) of the inner mandrel (20), wherein at least one engagement recess (8) is formed inwardly into the tube wall;
rotating the inner mandrel (20) around its longitudinal axis until the at least one engagement recess (8) is disengaged from the at least one recess (23) of the inner mandrel.

## Revendications

1. Elément de support d'appui-tête (2) constitué d'un corps tubulaire, qui d'une part peut être relié à un siège et d'autre part peut être relié à un appui-tête, le corps tubulaire étant fabriqué par formage en un matériau en bande obtenu par laminage flexible, qui présente une épaisseur de paroi variable,
**caractérisé en ce que** le corps tubulaire présente une épaisseur de paroi variable le long de l'étendue périphérique, des encoches d'encliquetage (8) pour la fixation par rapport au siège étant prévues dans une première zone de paroi (5) qui présente une épaisseur de paroi (d2) plus grande le long de l'étendue périphérique.

2. Elément de support d'appui-tête selon la revendication 1,
**caractérisé en ce qu'**est formée au moins une première zone de paroi (5) présentant une épaisseur de paroi (d2) plus grande et au moins une deuxième zone de paroi (6) présentant une épaisseur de paroi (d1) plus faible.

3. Elément de support d'appui-tête selon la revendication 2,
**caractérisé en ce que** la première zone de paroi (5) comprend un premier secteur périphérique (14) à épaisseur de paroi (d2) augmentée, et **en ce que** la deuxième zone de paroi (6) comprend un deuxième secteur périphérique (12) à épaisseur de paroi (d1) plus faible.

4. Elément de support d'appui-tête selon la revendication 3,
**caractérisé en ce que**, vu en section transversale, la paroi tubulaire varie de manière continue dans la direction périphérique, du premier secteur périphérique (14) à épaisseur de paroi (d2) maximale vers le deuxième secteur périphérique (12) à épaisseur de paroi (d1) minimale.

5. Elément de support d'appui-tête selon l'une des revendications 2 à 4,
**caractérisé en ce que** le corps tubulaire présente au moins sur une longueur partielle dans la zone des encoches d'encliquetage (8), une surface intérieure cylindrique circulaire.

6. Elément de support d'appui-tête selon l'une des revendications 2 à 5,
**caractérisé en ce que** la différence d'épaisseur de paroi entre la première zone de paroi (5) d'épaisseur de paroi (d2) plus grande et la deuxième zone de paroi (6) d'épaisseur de paroi (d1) plus faible, vaut entre 30% et 70% en se référant à l'épaisseur de paroi maximale (d2).

7. Elément de support d'appui-tête selon l'une des revendications 1 à 6,
**caractérisé en ce qu'**il est conçu sous forme de tige à encliqueter, qui forme une paire avec une autre tige à encliqueter, ces tiges supportant en commun l'appui-tête.

8. Elément de support d'appui-tête selon l'une des revendications 1 à 7,
**caractérisé en ce qu'**il est conçu sous forme d'étrier présentant deux ailes (9, 10) et une branche de liaison (11) qui relie les ailes l'une à l'autre.

9. Elément de support d'appui-tête selon l'une des revendications 1 à 8,
**caractérisé en ce que** le corps tubulaire présente en plus une épaisseur de paroi variable dans la direction longitudinale.

10. Procédé de fabrication d'un élément de support d'appui-tête selon l'une des revendications 1 à 9,
**caractérisé par** les étapes de procédé suivantes :
fabrication d'un élément de tôle à épaisseur de paroi variable à partir d'un matériau en bande obtenu par laminage flexible ;
formage de l'élément de tôle en un corps tubulaire, des premières zones de paroi (5) d'épaisseur de paroi (d2) plus grande et des deuxièmes zones de paroi (6) d'épaisseur de paroi (d1) plus faible étant formées le long de l'étendue périphérique ; et
façonnage d'encoches d'encliquetage (8) dans le corps tubulaire, les encoches d'encliquetage (8) étant façonnées dans les zones de paroi (5) à épaisseur de paroi (d2) plus grande le long de l'étendue périphérique.

11. Procédé selon la revendication 10,
**caractérisé en ce que** l'étape de procédé du façonnage des encoches d'encliquetage (8) comprend les étapes partielles suivantes :
introduction d'un mandrin intérieur (20) dans le corps tubulaire, le mandrin intérieur (20) présentant au moins un évidement latéral (23) ;
pressage de la paroi tubulaire dans ledit au moins un évidement (23) du mandrin intérieur (20), au moins une encoche d'encliquetage (8) étant ainsi formée vers l'intérieur dans la paroi tubulaire ;
rotation du mandrin intérieur (20) autour de son axe longitudinal jusqu'à ce que ladite au moins une encoche d'encliquetage (8) soit hors de prise avec ledit au moins un évidement (23) du mandrin intérieur.
